# FASCICULE DE BREVET EUROPEEN

(11) **EP 1 807 284 B1**
(45) Date de publication et mention de la délivrance du brevet: **31.03.2010**
(21) Numéro de dépôt: 05797436.2
(22) Date de dépôt: 31.08.2005
(51) Int. Cl.: B60N 3/00

(54) **VEHICULE UTILITAIRE AVEC UNE PORTE LATERALE POURVUE D'UNE TABLETTE ESCAMOTABLE**
KRAFTFAHRZEUG MIT EINER MIT EINEM VERSTAUBAREN TABLETT VERSEHENEN SEITENTÜR
UTILITY VEHICLE WITH A LATERAL DOOR PROVIDED WITH A STOWABLE TRAY

(30) Priorité: 29.10.2004 FR 0411583
(43) Date de publication de la demande: 18.07.2007
(73) Titulaire: Renault SAS, 92100 Boulogne Billancourt (FR)
(72) Inventeur: BLANDIN, Denis, F-78610 LE PERRAY EN YVELINES (FR); STCHOGOLEFF, Paul, F-92500 REUIL MALMAISON (FR)
(86) Numéro de dépôt international: PCT/FR2005/050694
(87) Numéro de publication internationale: WO 2006/048561

(56) Documents cités:
- DE-A1- 10 306 423
- DE-A1- 19 936 597
- DE-U1- 20 315 236
- FR-A- 2 775 639

## Description

L'invention concerne une porte latérale de véhicule automobile pourvue d'une tablette escamotable selon le préambule de la revendication 1, et un véhicule utilitaire pourvu d'une telle porte.

On connaît déjà l'utilisation de tablettes pour des portes latérales de véhicule automobile. Ainsi, le document EP 778 174 décrit l'agencement d'une tablette à l'intérieur d'une porte de véhicule. Cette tablette, formée d'une série d'éléments articulés successifs, coulisse à l'intérieur de la porte entre les parois interne et externe. La tablette peut ainsi être placée de manière à être utilisée par le passager assis sur le siège adjacent à la porte, lorsque la porte est fermée. Toutefois, la réalisation et le montage d'une telle tablette s'avèrent complexes, longs et coûteux.

L'invention vise à pallier ces inconvénients en proposant une porte pourvue d'une tablette pouvant être facilement réalisée et fixée.

A cet effet, l'objet de l'invention concerne une porte latérale de véhicule automobile pourvue d'une tablette escamotable, la tablette étant montée sur la paroi interne de la porte, caractérisée en ce que la tablette est articulée sur la paroi interne autour d'un axe sensiblement horizontal contenu dans le plan de la paroi interne, de manière à pouvoir être déplacée entre une position d'utilisation dans laquelle elle s'étend sensiblement horizontalement et une position de rangement dans laquelle elle est plaquée contre la paroi interne de la porte. Une porte de cette sorte est connue du document DE 203 15 236 U.

Il n'est ainsi plus nécessaire de prévoir un rangement de la tablette dans l'épaisseur de la porte, de sorte que la tablette peut être facilement et rapidement réalisée et fixée, à moindre coût.

L'axe d'articulation de la tablette est situé dans la moitié inférieure de la partie pleine de la porte de sorte que la tablette ne peut être placée en position d'utilisation que lorsque la porte est ouverte. La tablette peut ainsi être utilisée par une autre personne qu'un occupant du véhicule. Notamment, dans les véhicules utilitaires, une tablette telle que décrite dans le document EP 778 174 serait située à une hauteur trop grande pour pouvoir être utilisée par une personne située hors du véhicule lorsque la porte est ouverte.

De préférence, l'axe d'articulation de la tablette est situé de manière à être au dessus du plancher du véhicule. Une personne assise en dehors du véhicule, notamment d'un véhicule utilitaire, par exemple sur le bord du plancher, peut ainsi utiliser la tablette.

Avantageusement, l'axe d'articulation de la tablette est situé à une hauteur suffisante pour permettre l'utilisation de la tablette par une personne située hors du véhicule automobile, lorsque la porte est ouverte.

Avantageusement, la paroi interne de la porte est pourvue d'éléments d'appui aptes à soutenir la tablette dans la position d'utilisation.

De préférence, lorsque la tablette en position de rangement est située contre la paroi interne au dessus de son axe d'articulation, les éléments d'appui sont formés par le bord supérieur d'un bac de rangement solidaire de la paroi interne de la porte et situé sous l'axe d'articulation de la tablette. Il n'est ainsi pas nécessaire de prévoir des éléments particuliers pour renforcer l'appui de la tablette.

Avantageusement, la paroi interne de la porte est pourvue de moyens de blocage de la tablette en position de rangement de manière à éviter l'ouverture intempestive de la tablette, notamment lorsqu'elle est rangée au dessus de son axe d'articulation. Ces moyens de blocage peuvent être conçus pour limiter les vibrations de la tablette lorsque le véhicule roule.

L'invention concerne également un véhicule utilitaire pourvu d'une porte latérale selon l'invention.

L'invention est maintenant décrite en référence aux dessins annexés, non limitatifs, dans lesquels :
- la figure 1 est une vue en perspective d'une porte selon l'invention montée sur un véhicule utilitaire, la tablette étant en position d'utilisation ;
- la figure 2 est une vue en perspective partielle de la partie pleine de la porte de la figure 1, la tablette étant en position de rangement.

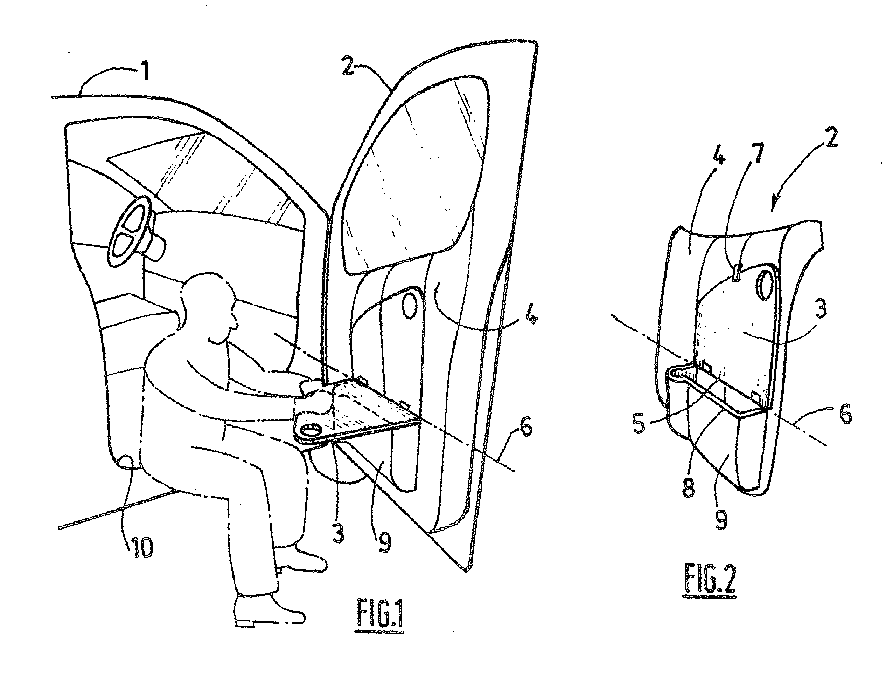

La figure 1 représente l'avant d'un véhicule utilitaire 1 et une porte latérale 2 du véhicule en position ouverte.

La porte 2 est pourvue d'une tablette 3 montée sur la paroi interne 4 de la porte, c'est-à-dire sur la paroi dirigée vers l'habitacle du véhicule lorsque la porte est fermée, et située sous la vitre de la porte.

La tablette 3 est formée d'une plaque sensiblement plane dont le bord inférieur 5 est articulé sur la paroi interne 4 autour d'un axe 6 sensiblement horizontal et contenu dans le plan de la paroi interne 4.

Dans l'exemple représenté, la tablette 3 est articulée de manière à être rabattue contre la paroi interne 4, au dessus de son axe d'articulation 6. A cet effet, la portion de paroi interne située au dessus de l'axe est de préférence sensiblement plane et dépourvue d'accessoires afin de ne pas gêner le rangement de la tablette. De préférence, les dimensions de la tablette sont choisies de sorte qu'en position de rangement, la tablette s'étende sensiblement jusqu'au bord de la partie pleine de la porte, sous la vitre.

Cet axe d'articulation 6 est placé dans la moitié inférieure de la partie pleine de la porte, de préférence au dessus du niveau du plancher du véhicule 10, par exemple entre le niveau du plancher du véhicule et le niveau de la surface d'assise du siège adjacent à la porte.

De cette manière, la tablette 3 ne peut être abaissée que lorsque la porte est ouverte. Dans l'exemple du véhicule utilitaire représenté, cet arrangement permet une utilisation de la tablette par une personne située en dehors du véhicule, par exemple assise sur le bord du plancher du véhicule, tel que représenté sur la figure 1.

Dans la position de rangement représentée sur la figure 2, la tablette est plaquée contre la paroi interne 4. Elle est par exemple maintenue au moyen d'un doigt de blocage mobile 7.

Dans l'exemple, l'axe d'articulation 6 de la tablette est situé sensiblement au niveau du bord supérieur 8 d'un bac de rangement 9 solidaire de la paroi interne de la porte et situé sous l'axe d'articulation 6, dont l'ouverture est dirigée vers le haut.

Dans la position d'utilisation sensiblement horizontale, la tablette 3 repose alors partiellement sur le bord supérieur 8 du bac de sorte que son maintien est amélioré.

La tablette peut également être pourvue d'accessoires, tel qu'un porte gobelet ou bouteille, ...

Bien entendu, d'autres modes de réalisation de la porte et de sa tablette sont envisageables. Notamment, la tablette pourrait être articulée à la paroi interne de manière à être plaquée contre celle-ci sous son axe d'articulation. La portion de paroi interne située sous l'axe est alors de préférence plane et dépourvue d'accessoires et des éléments d'appui spécifiques à la tablette peuvent être prévus pour maintenir la tablette dans la position horizontale d'utilisation. Un bac de rangement ou d'autres accessoires peuvent alors être prévus au dessus de l'axe d'articulation de la tablette.

## Revendications

1. Véhicule automobile comportant une porte latérale (2) pourvue d'une tablette (3) escamotable, la tablette étant articulée sur la paroi interne (4) de la porte, autour d'un axe sensiblement horizontal (6) contenu dans le plan de la paroi interne, de manière à pouvoir être déplacée entre une position d'utilisation dans laquelle elle s'étend sensiblement horizontalement et une position de rangement dans laquelle elle est plaquée contre la paroi interne de la porte, **caractérisé en ce que** l'axe d'articulation (6) de la tablette est situé dans la moitié inférieure de la partie pleine de la porte de sorte que la tablette (3) ne peut être placée en position d'utilisation que lorsque la porte est ouverte.

2. Véhicule selon la revendication 1, **caractérisé en ce que** l'axe d'articulation (6) de la tablette est situé de manière à être au dessus du plancher (10) du véhicule.

3. Véhicule selon l'une des revendications 1 ou 2, **caractérisé en ce que** l'axe d'articulation (6) de la tablette est situé à une hauteur suffisante pour permettre l'utilisation de la tablette par une personne située hors du véhicule automobile, lorsque la porte est ouverte.

4. Véhicule selon la revendication 1 à 3, **caractérisé en ce que** la paroi interne (4) est pourvue d'éléments d'appui aptes à soutenir la tablette (3) dans la position d'utilisation.

5. Véhicule selon la revendication 4, **caractérisé en ce que** la tablette (3) en position de rangement est située contre la paroi interne (4) au dessus de son axe d'articulation (6), et **en ce que** les éléments d'appui sont formés par le bord supérieur (8) d'un bac de rangement (9) solidaire de la paroi interne (4) de la porte et situé sous l'axe d'articulation (6) de la tablette.

6. Véhicule selon l'une des revendications 1 à 5, **caractérisé en ce que** la paroi interne (4) est pourvue de moyens de blocage (7) de la tablette en position de rangement.

## Claims

1. Motor vehicle comprising a lateral door (2) provided with a stowable tray (3), the tray being hinged to the internal wall (4) of the door, about a substantially horizontal axis (6) contained in the plane of the internal wall, so that it can be moved from a position of use in which it extends substantially horizontally and a stowed position in which it is held flat against the internal wall of the door, **characterized in that** the axis of articulation (6) of the tray is situated in the lower half of the solid part of the door so that the tray (3) can be placed in a position of use only when the door is open.

2. Vehicle according to Claim 1, **characterized in that** the axis of articulation (6) of the tray is situated such that it is above the floor (10) of the vehicle.

3. Vehicle according to Claim 1 or 2, **characterized in that** the axis of articulation (6) of the tray is situated at such a height as to allow the tray to be used by someone situated outside the motor vehicle, when the door is open.

4. Vehicle according to Claims 1 to 3, **characterized in that** the internal wall (4) is provided with support elements able to support the tray (3) in the position of use.

5. Vehicle according to Claim 4, **characterized in that** the tray (3) in the stowed position is situated against the internal wall (4) above its axis of articulation (6), and **in that** the support elements are formed by the upper edge (8) of a storage pocket (9) secured to the internal wall (4) of the door and situated below the axis of articulation (6) of the tray.

6. Vehicle according to one of Claims 1 to 5, **characterized in that** the internal wall (4) is provided with means (7) of locking the tray in the stowed position.

## Patentansprüche

1. Kraftfahrzeug mit einer Seitentür (2), die mit einem einklappbaren Tablett (3) versehen ist, wobei das Tablett so um eine im Wesentlichen horizontale, in der Ebene der Innenwand enthaltene Achse (6) an der Innenwand (4) der Tür angelenkt ist, dass es zwischen einer Gebrauchsposition, in der es sich im Wesentlichen horizontal erstreckt, und einer Verstauposition, in der es gegen die Innenwand der Tür angedrückt ist, verschoben werden kann, **dadurch gekennzeichnet, dass** die Gelenkachse (6) des Tabletts so in der unteren Hälfte des massiven Teils der Tür angeordnet ist, dass das Tablett (3) nur bei geöffneter Tür in die Gebrauchsposition platziert werden kann.

2. Fahrzeug nach Anspruch 1, **dadurch gekennzeichnet, dass** die Gelenkachse (6) des Tabletts so angeordnet ist, dass sie sich über dem Boden (10) des Fahrzeugs befindet.

3. Fahrzeug nach Anspruch 1 oder 2, **dadurch gekennzeichnet, dass** die Gelenkachse (6) des Tabletts hoch genug angeordnet ist, dass das Tablett von einer Person benutzt werden kann, die sich außerhalb des Kraftfahrzeugs befindet, wenn die Tür offen ist.

4. Fahrzeug nach den Ansprüchen 1 bis 3, **dadurch gekennzeichnet, dass** die Innenwand (4) mit Stützelementen versehen ist, die geeignet sind, das Tablett (3) in der Gebrauchsposition zu tragen.

5. Fahrzeug nach Anspruch 4, **dadurch gekennzeichnet, dass** das Tablett (3) in Verstauposition an der Innenwand (4) über seiner Gelenkachse (6) angeordnet ist und dass die Stützelemente vom oberen Rand (8) einer Verstauschale (9) gebildet werden, die fest mit der Innenwand (4) der Tür verbunden ist und unter der Gelenkachse (6) des Tabletts angeordnet ist.

6. Fahrzeug nach einem der Ansprüche 1 bis 5, **dadurch gekennzeichnet, dass** die Innenwand (4) mit Mitteln (7) versehen ist, die das Tablett in der Verstauposition arretieren.
